# EUROPEAN PATENT APPLICATION

(11) **EP 1 860 526 A1**
(43) Date of publication of application: **28.11.2007**
(21) Application number: 06114547.0
(22) Date of filing: 25.05.2006
(51) Int. Cl.: G06F 3/033, H04M 1/725

(54) **Temporary Modification of a User Profile in an Electronic Device**

(71) Applicant: Research In Motion Limited, Waterloo, Ontario N2L 3W8 (CA)
(72) Inventor: Steele, Joel, Richmond Hill Ontario L4S 2R1 (CA)
(74) Representative: Rickard, David John

(57) **Abstract**

A method for temporarily modifying a user profile includes maintaining a first user profile setting, receiving a second user profile setting associated with a period of time, and utilizing the second user profile setting during the period of time, otherwise utilizing the first user profile setting.

## Description

The present application relates generally to electronic devices and more particularly to temporary modification of a user profile in an electronic device.

Electronic devices and can provide a variety of functions including notifying users of various events throughout the day. Electronic devices can include several types of devices including desktop computers or mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS AND W-CDMA networks. Events, for which notification is desired, include, for example, receipt of a telephone call, receipt of an e-mail or facsimile, a daily alarm or alarm notifying the user of an upcoming appointment.

Although notifications are useful for alerting users of various events, they are often a source of interruption, annoyance and even embarrassment. Users of devices with notification functions often face interruptions and distractions as such devices ring or vibrate loudly at inappropriate times and places. For example, cellular telephones ring loudly in the middle of lectures, exams, movies, meetings, performances, dinners, ceremonies, etc.. Such inopportune ringing causes embarrassment for the user of the device, interrupts such happenings and distracts others. Moreover, in circumstances where there is a live performance, a lecture or ceremony, the ringing (or any other allowed method of notification) distracts the lecturer or the performer. Further, chiming of the notification function on an electronic device during an important meeting or in the middle of a conversation causes embarrassment to the owner of the device and can interrupt or disrupt the conversation, meeting or other happening.

These interruptions have become so regular that many people are beginning to speak out and some have started taking precautions to avoid such interruptions. For example, many lecturers and movie theater personnel have posted signs asking people to turn off their cellular phones and personal digital devices. It is also not uncommon for a person such as a speaker to politely remind participants to turn off their cellular telephones or other electronic devices.

In an effort to solve this problem, manufacturers have developed devices that allow different modes of notification, such as vibration and visual alerts, so that users can change the mode of notification if they are attending functions where interruptions are to be avoided. This change in mode of notification helps to reduce occurrence of embarrassing disruptions due to untimely audio notifications of events such as telephone calls or arrival of e-mails. A particular problem with this solution to untimely notification disruptions is that the user must change their personal profile to switch the notification mode back to a "default" mode after the conversation, meeting or other happening for which the notification mode was changed. Many users simply forget that the notification mode has been changed and therefore do not change the notification mode back to the "default" mode. Thus, the user of the device may miss phone calls, e-mails or appointments after forgetting to turn the notification mode back to default. In order to avoid having to change their user profile only to change it back after a short period of time, the user of the device may turn the device off. Again, many users simply forget to turn the device back on when desired which again may cause the user to miss phone calls, e-mails or appointments. This may have consequences for users that are dependent on their electronic devices.

According to one aspect, there is preferably provided an electronic device that includes at least one output device for emitting a plurality of different signals and a microcomputer for storing a first notification setting, storing a second notification setting associated with a period of time. The microcomputer causes the output device to emit at least one of the signals in accordance with the second notification setting upon occurrence of an event during the period of time and to emit at least one other of the signals in accordance with the first notification setting upon occurrence of an event outside of the period of time.

According to another aspect, there is preferably provided a method for temporarily modifying a notification in an electronic device. The method includes maintaining a first notification setting, receiving a second notification setting associated with a period of time, determining occurrence of an event and generating a signal upon determining the occurrence. The signal is generated in accordance with the second notification setting if the event is determined to occur during the period of time, otherwise the signal is generated in accordance with the first notification setting.

In accordance with another aspect, there is provided a method for temporarily modifying a user profile. The method includes maintaining a first user profile setting, receiving a second user profile setting associated with a period of time, and utilizing the second user profile setting during the period of time, otherwise utilizing the first user profile setting.

In accordance with still another aspect, there is preferably provided a computer-readable medium having computer readable code embodied therein. The computer readable code for maintaining a first user profile setting, receiving a second user profile setting associated with a period of time, and utilizing the second user profile setting during the period of time, otherwise utilizing the first user profile setting

### BRIEF DESCRIPTION OF THE DRAWINGS

The method and apparatus for temporarily modifying a user profile in an electronic device will be better understood with reference to the following description and to the Figures, in which:

Figure 1 is a representation of an electronic device for modifying a user profile in accordance with one embodiment;

Figure 2 is a block diagram of certain internal components within the electronic device of Figure 1;

Figure 3 shows a screen of an LCD display of the electronic device of Figure 1;

Figure 4 shows another screen of the LCD display of the electronic device of Figure 1;

Figures 5A and 5B show further screens of the LCD display of the electronic device of Figure 1;

Figures 6A and 6B show still further screens of the LCD display of the electronic device of Figure 1;

Figure 7 shows yet another screen of the LCD display of the electronic device of Figure 1;

Figure 8 is a flowchart depicting a method for temporarily modifying a user profile in accordance with one embodiment;

Figure 9 is a flowchart depicting steps in occurrence of an event and notification in accordance with the embodiment of Figure 8; and

Figure 10 is a flowchart depicting steps in occurrence of another event and notification in accordance with the embodiment of Figure 8

### DESCRIPTION OF PREFERRED EMBODIMENTS

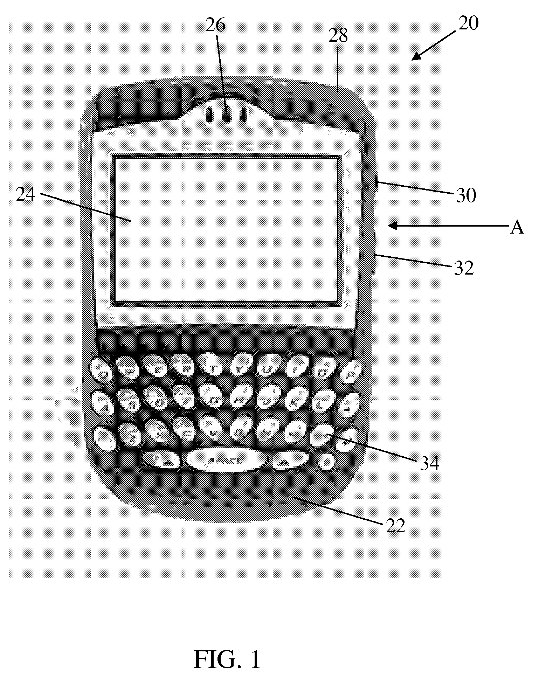

Referring to Figure 1, an electronic device for temporarily modifying a user profile in accordance with an embodiment is indicated generally by the numeral 20. In the present embodiment, the electronic device 20 is based on the computing environment and functionality of a wireless personal digital assistant. It will be understood, however, that the electronic device 20 is not limited to a wireless personal digital assistant. Other electronic devices are possible, such as desktop computers, cellular telephones, smart telephones, and laptop computers. Referring again to the present embodiment, the electronic device 20 includes a housing 22 that houses a mechanical vibration means (not shown) and frames an LCD display 24, a speaker 26, and LED indicator 28, a track wheel 30, an exit key 32 and a keypad 34. The track wheel 30 and the exit key 32 can be inwardly depressed along the path of arrow "a" as a means to provide additional user-input. The housing 22 is made from a suitable material as will occur to those skilled in the art, and can be stored, for example, in a holster (not shown) that includes an attachment for attaching to a user's belt.

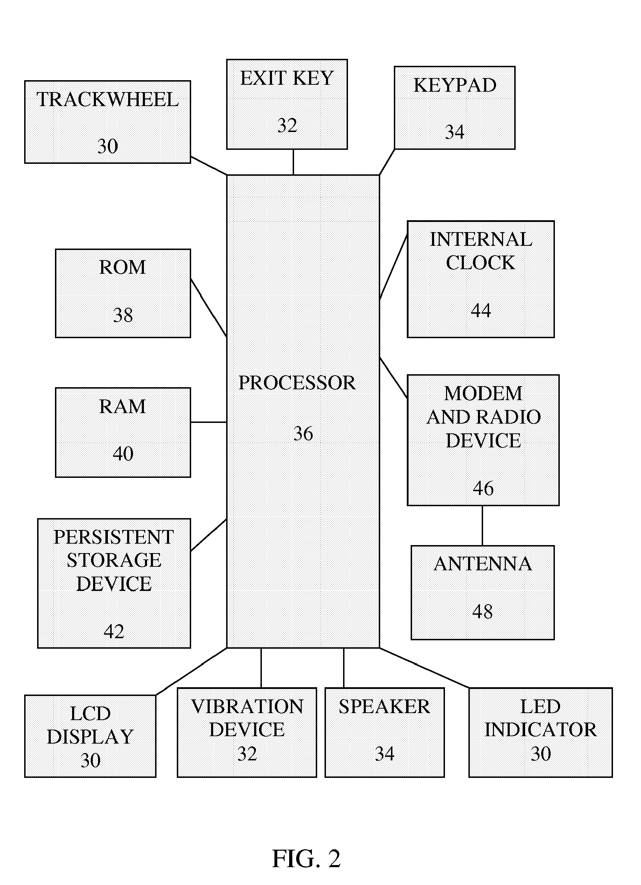

Referring now to Figure 2, a block diagram of certain internal components within the device 20 is shown. The device 20 is based on a microcomputer that includes a processor 36 that is connected to a read-only memory (ROM) 38 that contains a plurality of applications executable by the processor 36 that enables the device 20 to perform certain functions. The processor 36 is also connected to a random access memory unit (RAM) 40 and a persistent storage device 42 which are responsible for various non-volatile storage functions of the device 20. The processor 36 receives input from various input devices including the track wheel 30, the exit key 32, and the keypad 34. The processor 36 outputs to various output devices including the LCD display 24, the speaker 26, the LED indicator 28 and the mechanical vibration device 32. The processor 36 is also connected to an internal clock 44 and a modem and radio device 46. The modem and radio device 46 is used to connect to various wireless networks using an antenna 48.

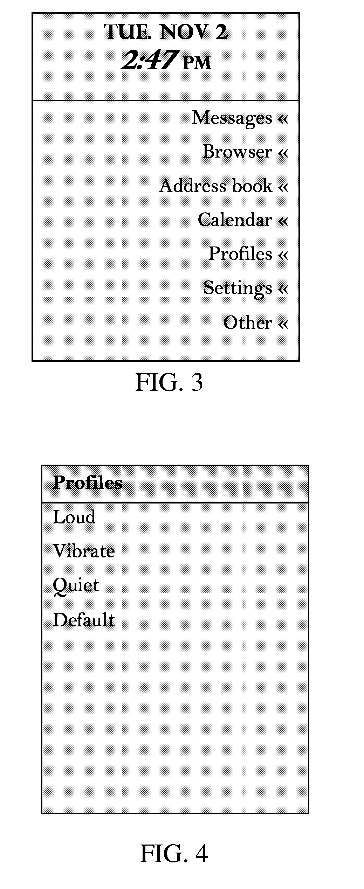

Reference is now made to Figure 3 which shows an exemplary menu screen that is displayed on the LCD display 24 of the electronic device 20. The exemplary menu screen includes a display clock that is updated according to the internal clock 44. The electronic device 20 is operable to execute various applications stored in the ROM 38. Such applications include, for example, a Message Reader, a Web browser, an Address book, a Calendar, Profiles, Settings and others. When executed by the processor 36, each application causes the device to operate in certain ways. The trackwheel 30 is used for scrolling through the applications and for selecting a desired application by pressing inwardly, along the path of arrow A, on the trackwheel 30. The exit key 32 is used for exiting any application by pressing inwardly along the path of arrow A.

It will be appreciated that e-mails are received on the electronic device 20 through a network (not shown), that connects to the device 20 via the modem and radio device 46 through the antenna 48. Each e-mail that is received includes a variety of information including a date of receipt and time of receipt. In order to view an e-mail message, the Message Reader is selected by scrolling using the track wheel 30 and pressing inwardly, which causes the execution of the Message Reader application by the processor 36.

It will also be appreciated that the Calendar application is used for displaying and storing calendared events such as appointments, lectures, exams, movies, meetings, performances, dinners, ceremonies, etc., when executed by the processor 36. Each calendared event includes a variety of information including a date and time of the event.

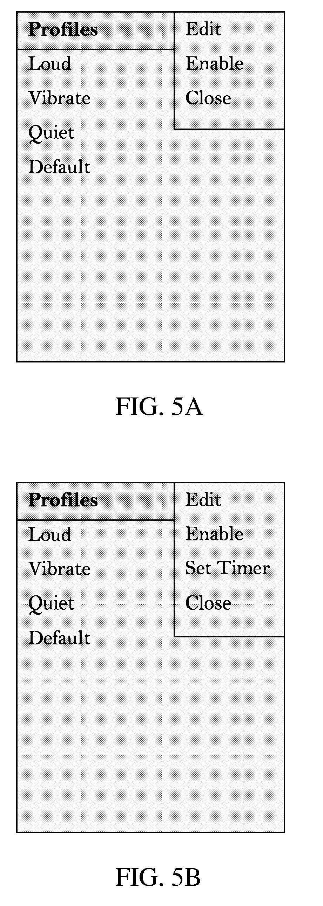

The Profiles application on the LCD display 24 is used for selection and customization of notification modes. Selection of the Profiles application on the LCD display 24 causes the processor 36 to execute the Profiles application and display a Profiles screen on the LCD display 24, as shown in Figure 4. The Profiles screen includes a number of profiles for selection. In the present embodiment, the Profiles screen includes, for example, Loud, Vibrate, Quiet and Default, all of which are selectable for controlling the mode of notification upon the occurrence of an event. Each of these profiles can be customized by the manufacturer or by the user according to user preferences.

The settings for each profile can be customized to give rise to a different notification output for various applications on the electronic device 20. For example, for each application, the notification behaviour can be customized according to a variety of criteria such as type of notification, notification tune, and volume. For each type of notification, the application can be customized to choose from any or all of audible, inaudible, and both audible and inaudible. Audible refers to sound emanating from the speaker 26 while inaudible refers to, for example, a light flashing from the LED indicator 28. The notification tune can be selected from a number of different ring tunes stored on the electronic device 20 and is played by the speaker 26 when the type of notification is set to audible. The volume relates to volume of the tune and can be selected from low, medium and high. Each profile can be similarly customized for each application.

Upon selection of one of the profiles from the Profiles screen, a submenu is displayed on the LCD display 24, displaying different options for selection, including Edit, Enable and Close. Referring, for exemplary purposes, to the selection of the Default profile, the selection of this profile gives rise to the options of Edit, Enable and Close, as shown in Figure 5A. The Edit option retrieves the Default settings and displays the Default setting for customizing the type of notification, the notification tune and the volume for each application type, as discussed above. Selection of the Enable option sets the active profile type, thereby setting the notification profile according to the settings for the criteria of the notification behaviour, as discussed above. Selection of the close option closes the menu displayed on the LCD display 24, returning control to the Profiles screen shown in Figure 4. It will be understood that similar options are provided for each of the profiles of Figure 4.

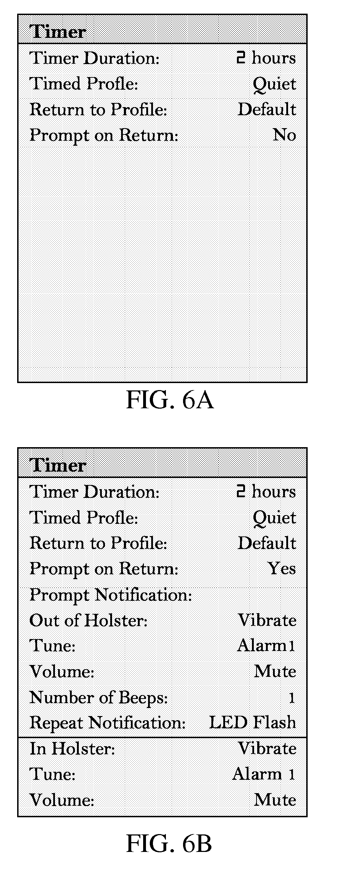

As discussed above, the Profiles screen shown in Figure 4 includes a number of profiles for selection, including Loud, Vibrate, Quiet and Default. Upon selection of the Quiet profile, the profile submenu is displayed on the LCD display 24, showing the different options for selection. As discussed above, the different options for selection include Edit, Enable and Close. In the case of the Quiet profile submenu, however, a further option of Set Timer is displayed, as shown in Figure 5B. The Set Timer option gives rise to a timer screen as shown in Figure 6A. The Set Timer option allows user selection of a period of time during which the active profile type is changed to Quiet. After the expiry of the period of time, the profile type reverts back to the previously enabled profile type (or the Default profile type when no other profile type has been enabled). Thus, the notification behaviour settings are temporarily changed to the notification behaviour settings for the Quiet profile for the user-selected period of time.

The timer screen shown in Figure 6A includes information such as the profile type (Quiet) and the Return to Profile which is the profile that the electronic device 20 returns to at the end of the timed Quiet profile. According to Figure 6A, the electronic device 20 returns to the Default profile after the timed Quiet profile. The timer screen also includes user selectable options including a Timer Duration option and the Prompt on Return option. The Timer Duration option is used for setting a timer by selecting a desired period of time for which the active profile type is Quiet. This Timer Duration can be selected from a number of preset times presented upon selection of the Timer Duration option or can be manually entered. Upon entry of the Timer Duration, the timer begins, based on the internal clock. The internal clock time at which the Timer Duration is entered is determined and is associated with the entered timer duration.

The Prompt on Return option is toggled by selecting between a "Yes" setting and a "No" setting. Selection of the "No" setting leads to the electronic device 20 reverting back to the previously enabled profile type (the Default profile in the screen shown in Figure 6A), at the expiry of the timer, without notifying the user through the use of any of the output devices. Selection of the "Yes" setting gives rise to a number of further options for selection as shown in Figure 6B. These options all relate to a prompt notification which is the notification that the user is presented with upon expiry of the timer and prior to reverting back to the previously enabled profile. These options include five options relating to the prompt notification behaviour when the electronic device 20 is not in the holster and three options relating to the prompt notification behaviour when the electronic device 20 is in the holster. The five options relating to the prompt notification behaviour when the electronic device is not in the holster include, for example, a prompt notification type which is indicated as vibrate in Figure 6B, a prompt notification tune, a prompt notification volume, the number of beeps and the repeat notification. The prompt notification type, prompt notification tune and prompt notification volume are similar to the notification type, notification tune and notification volume described above in referring to the Edit option of the profile settings, but relate only to the prompt notification at the expiry of the timer. The number of beeps relates to the number of alarm notifications and the repeat notification relates to the number of repeat notifications in the event that the user does not respond to the prompt notification of expiry of the timer.

The three options relating to prompt notification behaviour when the electronic device 20 is in the holster include prompt notification type (which is indicated as vibrate in Figure 6B), the prompt notification tune and the prompt notification volume. Thus, the prompt notification behaviour can be customized for notifying the user of expiry of the timer.

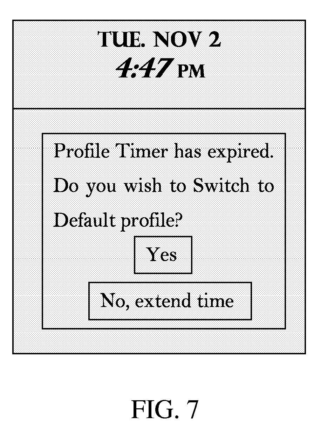

When the Timer Duration is entered, the microcomputer performs the mathematical operations to determine the time of expiry of the timer based on the internal clock time at which the Timer Duration is entered and the entered Timer Duration. The microcomputer then sets the prompt notification that the timer has expired for the determined time of expiry. Thus, at the determined time of expiry, the microcomputer determines whether or not to prompt on return to the previously enabled profile (or default profile) based on the Prompt on Return option shown in Figures 6 and 7. If the "No" option is selected, then no prompt or notification is provided at the expiry of the timer and the active profile changes from Quiet to the previously enabled profile. If the "Yes" option is selected, it is determined if the electronic device 20 is in the holster or out of the holster, the appropriate prompt notification behaviour is determined and the prompt notification is provided in accordance with the determined prompt notification behaviour.

With the "Yes" option selected for the Prompt on Return, the expiry of the timer also gives rise to the LCD screen 24 prompt and options shown in Figure 7, in which information is provided advising of the expiry of the timer and prompting the user to select between "Yes" and "No" options. Selection of the "Yes" option switches from Quiet to the previously enabled profile. Selection of the "No" option retains the Quiet profile as the active profile and again gives rise to the timer screen shown in Figure 6A.

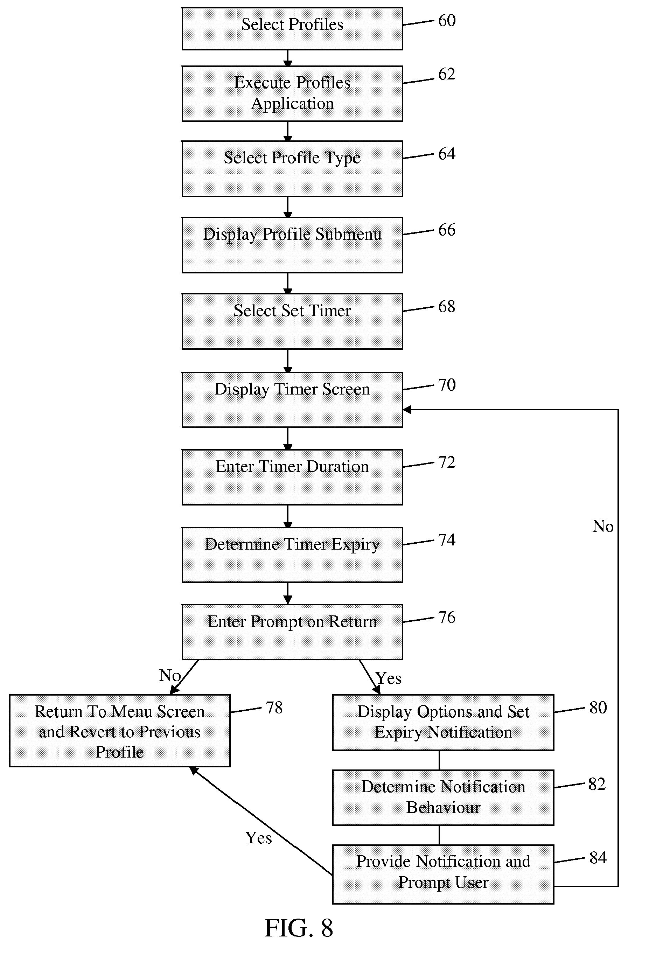

A method for temporarily modifying a user profile will now be discussed. To assist with the explanation of the method, reference will be made to the foregoing discussion of the electronic device 20. Referring to Figure 8, there is shown a flowchart for temporarily modifying a user profile. This flowchart illustrates steps that include user input as well as software execution within the processor 36. The coding of such software is well within the scope of a person of ordinary skill in the art. Starting from the menu screen shown in Figure 3A, the Profiles application is selected on the LCD display 24 (Step 60). Upon selection of the Profiles application on the LCD display 24, the processor 36 executes the Profiles application and displays a Profiles screen as shown in Figure 4 (Step 62). Next, the "Quiet" profile is selected on the Profiles screen (Step 64) giving rise to the profile submenu which provides the options of Edit, Enable, Set Timer and Close, as discussed above with reference to Figure 5B (Step 66). The Set Timer option is then selected (Step 68) which gives rise to the timer screen shown in Figure 6A (Step 70). In the present exemplary embodiment, the timer screen shows the Return to Profile is set to the Default profile, thus, the most recently enabled profile is the Default profile and the profile is set to return to the Default profile upon expiry of the timer. The Timer Duration is then entered (Step 72). As shown, the timer duration is set at 2 hours in Figure 6A. Upon entry of the timer duration, the profile type is changed to the "Quiet" profile and therefore the notification behaviour is changed to the notification behaviour of the "Quiet" profile. The internal clock time at which the Timer Duration is entered is associated with the entered Timer Duration and the microcomputer performs the mathematical operations to determine the expiry time of the timer based on the internal clock time at which the Timer Duration is entered and the entered Timer Duration (Step 74). The Prompt on Return option on the timer screen is set to "No" (Step 76) and thus, the profile type reverts back to the Default profile at the expiry of the timer (Step 78), without notifying the user through the use of any of the output devices and the LCD display 24 again displays the Menu screen shown in Figure 3.

A method for temporarily modifying a user profile in accordance with another embodiment will now be discussed with continued reference to Figure 8. Starting from the menu screen shown in Figure 3, the Profiles application is selected on the LCD display 24 (Step 60). Upon selection of the Profiles application on the LCD display 24, the processor 36 executes the Profiles application and displays a Profiles screen as shown in Figure 4 (Step 62). Next, the "Quiet" profile is selected on the Profiles screen (Step 64) giving rise to the profile submenu which provides the options of Edit, Enable, Set Timer and Close, as discussed above with reference to Figure 5B (Step 66). The Set Timer option is then selected (Step 68) which gives rise to the timer screen shown in Figure 6A (Step 70). In the present exemplary embodiment, the timer screen shows the Return to Profile is set as the Default profile, thus, the most recently enabled profile is the Default profile and the profile is set to return to the Default profile upon expiry of the timer. The Timer Duration is then entered (Step 72). As shown, the Timer Duration is set at 2 hours in Figure 6A. Upon entry of the Timer Duration, the active profile type is changed to the "Quiet" profile and therefore the notification behaviour is changed to the notification behaviour of the "Quiet" profile. The internal clock time at which the timer duration is entered is associated with the entered Timer Duration and the microcomputer performs the mathematical operations to determine the time of expiry of the timer, based on the internal clock time at which the Timer Duration is entered and the entered Timer Duration (Step 74). In the present embodiment, the Prompt on Return option on the Timer screen is toggled to "Yes" (Step 76), thereby giving rise to a number of further options as described above with reference to Figure 6B (Step 80) and setting a prompt notification for the determined time of expiry of the timer. As shown in Figure 6B, whether or not the electronic device 20 is in the holster or out of the holster, the prompt notification type is set to vibrate, which refers to mechanical vibration of the electronic device by the mechanical vibration device 43. The prompt notification tune is set to BBElectronicAlarm, however the prompt notification volume is set to Mute. Thus, no sound emanates from the speaker 26 of the electronic device 20. The Number of Beeps is set to 1 and the Repeat Notification is set to LED Flashing such that the LED indicator 28 flashes when the user does not respond to the prompt notification that the Timer Duration has expired.

When the timer expires, the prompt notification is determined based on the prompt notification behaviour selected at step 78 and shown in Figure 6B (Step 82) and the prompt notification is provided in accordance with this prompt notification behaviour (Step 84). In the present exemplary embodiment, the prompt notification is provided in the form of mechanical vibration when the electronic device 20 is in the holster and when the electronic device 20 is out of the holster. The prompt notification and options shown in Figure 7 are also displayed on the LCD screen 24. As previously discussed, the prompt notification indicates expiry of the timer and prompts the user to select between the "Yes" and "No" options. In the present embodiment, the "No" option is selected so that the timer screen shown in Figure 6A is again displayed on the LCD screen 24 upon expiry of the timer. Thus, the method proceeds to step 70 and the active profile is not switched back to the Default profile. It will therefore be understood that the period of time during which the Quiet profile remains active is related to both the first time the Timer Duration is set on the timer screen (Step 70) and the second time the Timer Duration is set on the timer screen (upon return to Step 70).

In another embodiment, the "Yes" option is selected at step 84 and the active profile is switched back to the Default profile upon expiry of the timer, and the menu screen is again displayed (Step 78).

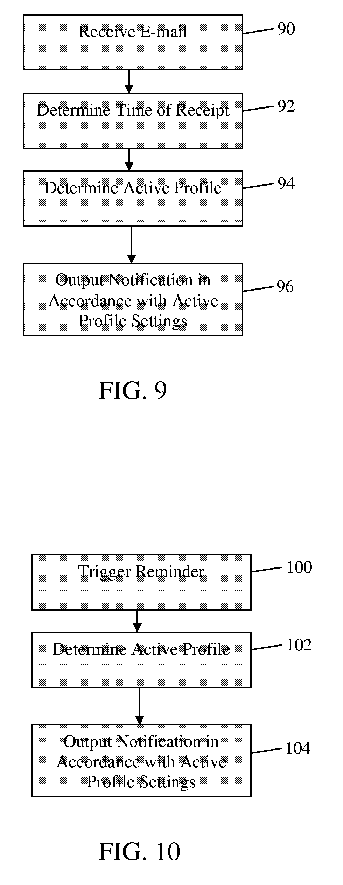

To illustrate the use of the temporarily modified profile, reference is made to Figure 9 in describing the following example starting with the occurrence of an event. In the present example, the event is an e-mail received at 4:00 p.m. (Step 90). Upon receipt of the e-mail, the time of receipt is determined according to the internal clock 44 (Step 92). Next, the active profile type is determined. For the purpose of this example, the active profile type has been temporarily changed to the "Quiet" profile using the "Set Timer" according to one of the methods discussed above with reference to Figure 8. Thus, the active profile is determined to be the "Quiet" profile (Step 94). Since the "Quiet" profile is active, the user is notified of the event in accordance with the notification behaviour of the "Quiet" profile. In the present case, no audible sound emanates from the speaker 26 as the "Quiet" profile includes the volume setting "Mute" (Step 96).

To further illustrate the use of the temporarily modified profile, continued reference is made to Figure 9 in describing a further example including the occurrence of a further event. In the present example, a second e-mail is received at 5:00 p.m. (Step 90). Again upon receipt of the e-mail, the time of receipt is determined according to the internal clock 44 (Step 92). Again the active profile type is determined. For the purpose of this example, the active profile has reverted to the "Default" profile after expiry of the timer as discussed above with reference to Figure 8. Thus, in this example, the active profile is determined to be the "Default" profile (Step 94). Again for the purpose of this example, the "Default" profile includes a type of notification, notification tune and volume settings such that a sound emanates from the speaker 26, notifying the user of the occurrence of the event (Step 96).

To still further illustrate the use of the temporarily modified profile, reference is made to Figure 10 in describing the following example starting with the occurrence of an event. In the present example, the event is a reminder set using the Calendar application, as will be understood by those skilled in the art. The reminder is first triggered at the time set using the Calendar application (Step 100). Next, the active profile type is determined. For the purpose of this example, the active profile has been temporarily changed to the "Quiet" profile using the "Set Timer" according to one of the methods discussed above with reference to Figure 8. Thus, the active profile is determined to be the "Quiet" profile (Step 102). Since the "Quiet" profile is active, the user is notified of the event in accordance with the notification behaviour of the "Quiet" profile. In the present case, no audible sound emanates from the speaker 26 as the "Quiet" profile includes the volume setting "Mute" (Step 104).

Continued reference is made to Figure 10 to describe yet another example. In the present example, a second reminder is triggered after the first reminder at the time set using the Calendar application (Step 100). Again, the active profile type is determined (Step 102). For the purpose of this example, the active profile has reverted to the "Default" profile after expiry of the timer as discussed above. Thus, in this example, the active profile is determined to be the "Default" profile. Again for the purpose of this example, the "Default" profile includes a type of notification, notification tune and volume settings such that sound emanates from the speaker 26, notifying the user of the occurrence of an event (Step 104).

While the embodiments described herein are directed to particular implementations of the method for temporarily modifying a user profile in an electronic device, it will be understood that modifications and variations to these embodiments are within the scope and sphere of the present application. For example, although the Set Timer option is described above as being provided in the Quiet profile, it will be understood that such an option can be provided in any of the profiles. For example, a Set Timer option can be used to temporarily change the profile to the "Loud" profile for a period of time if a user enters a location with a lot of background noise. Also, the profiles and options described herein are described for exemplary purposes only and are not intended to be limiting. It will be understood that other profiles and options can be provided as will occur to those skilled in the art. It will also be understood that the receipt of an e-mail or triggering of a reminder from the Calendar application are merely examples of events that can generate a notification. Other examples are possible, such as telephone calls, faxes, voice-mail, messages, alarms, warning messages from the device such as "low battery", and any other event for which a notification is useful.

Many other modifications and variations may occur to those skilled in the art. All such modifications and variations are believed to be within the sphere and scope of the present application.

## Claims

1. An electronic device comprising:
at least one output for generating a plurality of different notifications; and
a processor for storing a first notification setting, storing a second notification setting associated with a period of time, and causing said output to generate at least one of said notifications in accordance with said second notification setting upon occurrence of an event during said period of time and to emit at least one other of said notifications in accordance with said first notification setting upon occurrence of an event outside of said period of time.

2. The electronic device of claim 1, wherein said device comprises any of a wireless personal digital assistant, a personal computer, a cellular telephone, or a smart telephone.

3. The electronic device of claim 1 or claim 2, wherein said notifications comprise audible, mechanical and/or visual signals.

4. The electronic device of any preceding claim, wherein said period of time is a user-defined time period.

5. The electronic device of any preceding claim, wherein said at least one notification in accordance with said second setting comprises a mechanical signal and/or a visual signal.

6. The electronic device of any preceding claim, wherein said second notification setting is a user-defined notification setting.

7. The electronic device of claim 6, wherein said period of time is related to a first user-defined time period.

8. The electronic device of claim 7, wherein said at least one output further provides at least a visual indication prior to expiry of said user-defined time period.

9. The electronic device of claim 8, wherein said visual indication comprises a prompt for confirmation to switch from said second notification setting to said first notification setting.

10. The electronic device of any preceding claim, wherein said period of time is related to a first user-defined time period and further user-defined time periods.

11. The electronic device of any preceding claim, wherein said processor extends said period of time in response to receipt of an indication from a user.

12. A method for temporarily modifying a notification in an electronic device, the method comprising:
maintaining a first notification setting;
receiving a second notification setting associated with a period of time;
determining occurrence of an event;
generating a notification upon determining said occurrence, wherein
said notification is generated in accordance with said second notification setting if said event is determined to occur during said period of time, otherwise said signal is generated in accordance with said first notification setting.

13. The method according to claim 12, wherein said receiving the second notification setting associated with a period of time comprises:
receiving said second notification setting along with an indication of said period of time.

14. The method according to claim 12, wherein said receiving the second notification setting associated with a period of time comprises:
receiving said second notification setting along with an indication of a first time period wherein said first time period is related to said period of time.

15. The method according to claim 14, further comprising extending said first time period in response to receipt of an indication from a user.

16. The method according to claim 14 or claim 15, further comprising providing at least a visual indication prior to expiry of said first time period.

17. The method according to claim 16, further comprising receiving an indication of a second time period after providing said visual indication, wherein said period of time is related to both said first time period and said second time period.

18. The method according to claim 12, wherein said receiving a second notification setting associated with a period of time comprises:
receiving a second notification setting;
requesting an indication of a first time period that is related to said period of time; and
receiving an indication of said first time period.

19. A computer-readable medium having computer readable code embodied therein for implementing the method of any one of claims 12 to 18 in a computing device.

## Amended claims

### Amended claims in accordance with Rule 86(2) EPC.

**1.** A method for temporarily modifying a notification setting in an electronic device, the method comprising:
maintaining a first notification setting;
temporarily activating a second notification setting associated with a period of time, thereby switching from said first notification setting to said second notification setting;
providing a user-selectable option to prompt the user to activate the first notification setting upon expiry of said period of time, thereby switching from said second notification setting to said first notification setting, or to activate the first notification setting upon expiry of said period of time, thereby switching from said second notification setting to said first notification setting without notifying the user;
providing a prompt to said user to activate the first notification setting, if said option to prompt the user is selected, otherwise activating the first notification without notifying the user upon expiry of said period of time,
wherein a notification is generated in accordance with the second notification setting if an event is determined to occur while said second notification setting is active, otherwise said notification is generated in accordance with the first notification setting.

**2.** The method according to claim 1, wherein said temporarily activating said second notification setting comprises:
receiving said second notification setting along with an indication of said period of time.

**3.** The method according to claim 1 or claim 2, wherein said prompt comprises a visual indication of expiry of said period of time.

**4.** The method according to claim 3, wherein said prompt comprises a user-selectable option to activate said first notification setting, thereby switching from said second notification setting to said first notification setting, or to retain the second notification setting.

**5.** The method according to claim 4, comprising providing a user-selectable duration option for user entry of an additional period of time during which said second notification setting is retained in response to receipt of a user selection to retain the second notification setting.

**6.** The method according to claim 5, comprising receiving a user-selected option to prompt the user prior to activating said first notification setting, thereby switching from said second notification setting to said first notification setting, or to activate said first notification setting, thereby switching from said second notification setting to said first notification setting without notifying the user upon expiry of said additional period of time.

**7.** A computer-readable medium having computer readable code embodied therein for implementing the method of any one of claims 1 to 6 in a computing device.

**8.** An electronic device comprising:
at least two outputs for generating a plurality of different notifications;
a display device;
a user input;
a memory for storing a first notification setting, storing a second notification setting associated with a period of time
a processor connected to the at least one output, the display device, the user input and the memory, for executing a program stored in the memory to cause the electronic device to perform the method according to any one of claims 1 to 6.

**9.** The electronic device of claim 8, wherein said device comprises any of a wireless personal digital assistant, a personal computer, a cellular telephone, or a smart telephone.

**10.** The electronic device of claim 8 or claim 9, wherein said notifications comprise audible, mechanical and/or visual signals.
